# EUROPEAN PATENT APPLICATION

(11) **EP 0 795 427 A1**
(43) Date of publication of application: **17.09.1997**
(21) Application number: 97103568.8
(22) Date of filing: 04.03.1997
(51) Int. Cl.: B60C 11/11

(54) **A pneumatic agricultural tire**

(30) Priority: 11.03.1996 US 613651
(71) Applicant: THE GOODYEAR TIRE & RUBBER COMPANY, Akron, Ohio 44316-0001 (US)
(72) Inventor: Bonko, Mark Leonard, Uniontown, Ohio 44685 (US)
(74) Representative: Leitz, Paul

(57) **Abstract**

A pneumatic agricultural tire 20 for the drive axle of a tractor or like vehicle has a plurality of traction lugs 50 that extend from the shoulders toward the equatorial centerplane of the tread 32 but not crossing it thereby forming a continuous open channel 70 centered at the equatorial plane. The lugs 50 are uniquely designed having an enlarged, steeply inclined riding cleat 65A and a less steeply inclined axially outer lug portion 65B,65C of substantially narrower width.

## Description

### Background of the Invention

This invention relates to a pneumatic agricultural tire for the drive axle of a tractor or like vehicle.

Farm tires for the drive axle of a tractor have a primary function of providing tremendous pulling traction in soil. To accomplish this task the tread patterns are very open with widely circumferentially spaced elongated traction elements commonly called lugs or bars. Most such tires employ what is called "long bars." These lugs extend from the tread shoulders axially inwardly and some or all of the lugs cross the tread centerline. These lugs or bars commonly have an enlarged lug head at the axially innermost portion of the lug. Such tires are shown in prior art U.S. Patents 3,603,370, 4,383,567, and 4,534,392.

The primary limitation of such tires was related to the limited amount of lug edges or surfaces which could be provided for traction. To increase this feature, the named inventor of this patent earlier developed a tire commercially sold as the Goodyear DT710 tire. This tire is described in U.S. Patent 5,046,541. The tire employed four rows of relatively short bars. This increased number of bars provided much more biting edges for traction and as a result has demonstrated significantly superior traction.

Some farmers, however, are reluctant to believe that short bars can be as effective in very wet soils which can tend to pack the tires with mud. Although the DT710 tires perform very well in these conditions, the inventor has attempted to achieve a tractor tire having long bars with excellent tractive performance, handling and ride performance and superior tread cleaning properties in sloppy wet soil conditions. To achieve this result the inventor has designed a unique tractor tread that has an open circumferentially continuous channel at the center of the tread.

Heretofore, the inventor had shown a tire in his U.S. Patent 5,337,816, that was designed for irrigation systems. When in use, these tires rotate very slowly at rates of minutes per revolution. This type of tire has minimal traction retirements and no real ride or vibration concerns. These tires, however, had conceptually good mud cleaning potential. However, such a tire was not considered possible for a drive axle of a tractor.

One group of early inventors, Bertazzolia et al., in U.S. Patent 4,131,148, disclosed a tread that had the axially inner ends of the lugs at the radially outer surfaces located tangent to the centerplane of the tread. This was a dramatic departure from the conventional practices of designing farm tires. The results and accomplishments claimed, although good, are believed to be inferior to the Applicants' new tire. The tire of the present invention has a very durable design that is believed to be capable of excellent performance in very wet and very dry soil conditions. This multipurpose capability, coupled with the roadworthy handling and ride features, means that a farmer can rely on one set of these tires that will meet the entire range of farming conditions. Currently, farmers must stock a variety of special application tires like rice cane and the like in addition to conventional tires. This inventive tire will make that practice in many cases obsolete and will, therefore, provide a good cost savings for many farmers.

### Summary of the Invention

A pneumatic agricultural tire 20 for the drive axle of a tractor or like vehicle has a maximum section width (W), an axis of rotation, an equatorial plane, the equatorial plane being centered between the maximum section width and being perpendicular to the axis, a casing having a carcass 21 reinforced with rubber coated cords, a rubber tread 32 disposed radially outwardly of the carcass 21.

The tread 32 is divided on each side of the equatorial plane into a first and a second tread half 32A and 32B. The tread 32 has an inner tread 34 and a plurality of tread lugs 50. Half of the lugs 50 are on the first tread half 32A while the remaining half of the lugs 50 are on the second tread half 32B.

Each lug 50 within its respective tread half is oriented similarly. Each lug 50 is equally but oppositely oriented relative to the lugs 50 of the opposing tread half. Each lug 50 has a radially outer surface 58 divided into an axially inner portion 65A and an axially outer portions 65B and 65C. The axially inner portion has a centerline 63A midway between a leading and a trailing edge of the lug 50. This centerline 63A forms an acute included angle θᵢ with respect to the equatorial plane of less than 40° preferably less than 35°, most preferably about 30°. The axially outer portions have centerlines 63B and 63C midway between a leading edge 52 and trailing edge 54 of the lug 50. The centerlines 63B and 63C form an average acute angle θₒ with respect to the equatorial plane greater than 60° and less than 90°. Each lug surface 58 lies entirely within its respective tread half 32A or 32B and has an axially innermost end 51 spaced from the equatorial plane, the combination of lugs 50 forming a circumferentially straight continuous open channel 70 centered at the equatorial plane.

Preferably the length of the centerline 63A is less than the total lengths of the centerlines 63B and 63C while the average width of the surface of the axially inner portion 65A is greater than the average width of the surface of the axially outer portions 65B and 65C.

An important aspect of the invention is the large amount of spacing between the lug surfaces 58. The minimum distance S between adjacent lug surfaces 58 occurs along a line intersecting the equatorial plane. The line extends a distance of at least 180% of the surface width of the axially outer portion of the lugs 50.

The tractor tire 20 according to the preferred embodiment of the invention has a unique lug 50 which has the axially inner portion 65A of the lug 50 enlarged in width (Wᵢ) and elongated in length (lᵢ), the centerline 63A being in the range of 25% to 40%, preferably about one-third of the overall lug length and inclined at an angle of less than 40°, preferably about 30° relative to the equatorial plane. The width (Wᵢ) of the inner portion 65A is at least 125% of the width (Wₒ) of the axially outer portion S, preferably about 150%. The axially outer portion S having a length lₒ of greater than 60%, preferably about two-thirds of the overall lug length and an average inclination of the centerlines 63B and 63C in the range of 60° to 90°, preferably in the range of 60° to 75°. The axially outer portions can be continuously curved or formed with progressively increasing inclinations of two or more straight sections. This unique lug 50 has the axially inner portion 65A hereinafter referred to as a riding cleat for improved handling and vibration characteristics. The cleat 65A has an almost circumferential orientation which enables this enlarged surface to more easily penetrate deeply into the soil enabling the rest of the tread 32 to also penetrate into the soil. This feature is essential to insure excellent tractive performance in difficult hard packed dry conditions Furthermore, this riding cleat 65A is of sufficient size to insure that the tread 32 is stable even across the centerline region where no lugs 50 traverse as would be the practice in conventional tractor tires.

### Definitions

"Aspect Ratio" means the ratio of its section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers, the bead or beads under the tread being encapsulated in tread rubber can be with or without other cord reinforced fabric elements.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Bias Ply Tire" means that the reinforcing cords in the carcass ply extend diagonally across the tire from bead-to-bead at about a 25-65° angle with respect to the equatorial plane of the tire, the ply cords running at opposite angles in alternate layers.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction.

"Design Rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization--Standards Manual and the term design rim means the same as the standard measurement rims. In Japan, the standard organization is The Japan Automobile Tire Manufacturer's Association.

"Design Rim Width" is the specific commercially available rim width assigned to each tire size and typically is between 75% and 90% of the specific tire's section width.

"Equatorial Plane (EP)" means the plane perpendicular to the tire's axis of rotation and passing through the center of its tread.

"Footprint" means the contact patch or area of contact of the tire tread with a flat surface at zero speed and under normal load and pressure.

"Inner" means toward the inside of the tire and "outer" means toward its exterior.

"Lateral Edge" means the axially outermost edge of the tread as defined by a plane parallel to the equatorial plane and intersecting the outer ends of the axially outermost traction lugs at the radial height of the inner tread surface.

"Leading" refers to a portion or part of the tread that contacts the ground first, with respect to a series of such parts or portions, during rotation of the tire in the direction of travel.

"Net-to-gross Ratio" means the ratio of the surface are of the normally loaded and normally inflated tire tread rubber that makes contact with a hard flat surface, divided by the total area of the tread, including noncontacting portions such as grooves as measured around the entire circumference of the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" (SH) means the radial distance from the nominal rim diameter to the outer diameter of the tire at its equatorial plane.

"Section Width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Tire Design Load" is the base or reference load assigned to a tire at a specific inflation pressure and service condition; other load-pressure relationships applicable to the tire are based upon that base or reference.

"Trailing" refers to a portion or part of the tread that contacts the ground last, with respect to a series of such parts or portions during rotation of the tire in the direction of travel.

"Tread Arc Width" (TAW) means the width of an arc having its center located on the plane (EP) and which substantially coincides with the radially outermost surfaces of the various traction elements (lugs, blocks, buttons, ribs, etc.) across the lateral or axial width of the tread portions of a tire when the tire is mounted upon its designated rim and inflated to its specified inflation pressure but not subject to any load.

"Tread Width" means the arc length of the tread surface in the axial direction, that is, in a plane parallel to the axis of rotation of the tire.

"Unit Tread Pressure" means the radial load borne per unit area (square centimeter or square inch) of the tread surface when that area is in the footprint of the normally inflated and normally loaded tire.

### Brief Description of the Drawings

The following is a brief description of the drawings in which like parts bear like reference numerals and in which:
Figure 1 is a perspective view of the preferred embodiment tire according to the invention.
Figure 2 is a plan view of the tire of Figure 1.
Figure 3 is an enlarged fragmentary view of a portion of the tread of the tire taken from Figure 2.
Figure 4 is a cross-sectional view of the tire taken along lines 4-4 of Figure 2.
Figure 5 is a plan view of a portion of the contact patch of the preferred tire according to the present invention.

### Detailed Description of the Invention

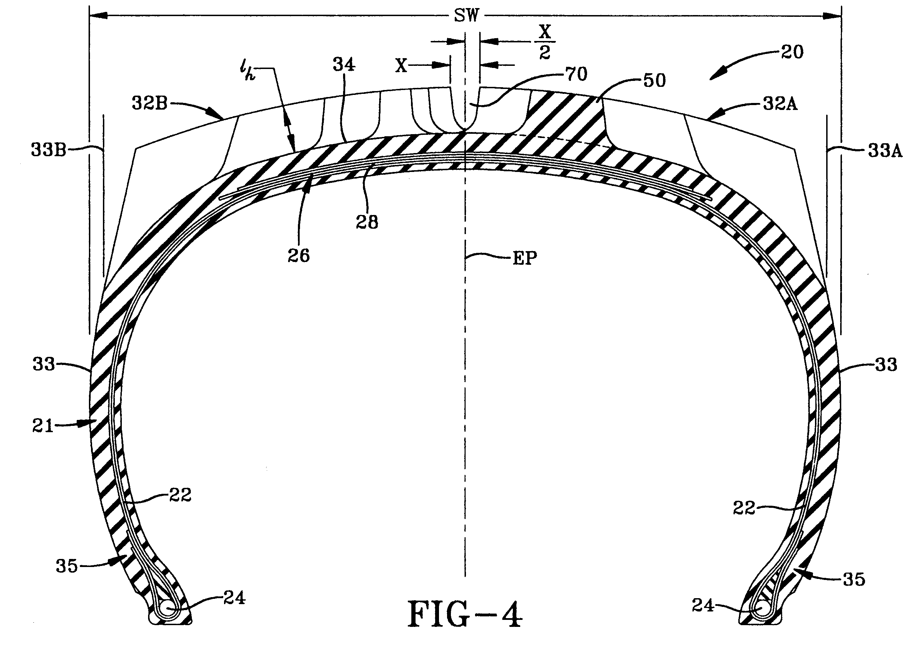

Now referring to Fig. 4, a tire is shown in cross-section view generally as reference numeral 20. The pneumatic tire has a carcass 21 having one or more carcass plies 22 extending circumferentially about the axis of rotation of the tire 20. The carcass plies are anchored around a pair of substantially inextensible annular beads 24. A belt reinforcing member 26 comprising one or more belt plies 28 are disposed radially outwardly from the carcass plies. The belt plies provide reinforcement for the crown region of the tire. A circumferentially extending tread 32 is located radially outwardly of the belt reinforcing structure 26.

A sidewall portion 33 extends radially inwardly from each axial or lateral tread edge 33A,33B of the tread to an annular bead portion 35 having the beads 24 located therein.

The carcass plies 22 preferably have textile or synthetic cords reinforcing the plies. The cords are preferably oriented radially. Most preferably, the cords are made of polyester or nylon material. Typically, the tire may have two, three or four plies, each construction increasing in load carry capability as a function of the number of plies.

The belt reinforcement member 26 preferably includes at least two belts reinforced by synthetic cords of polyester, nylon, rayon or aramid.

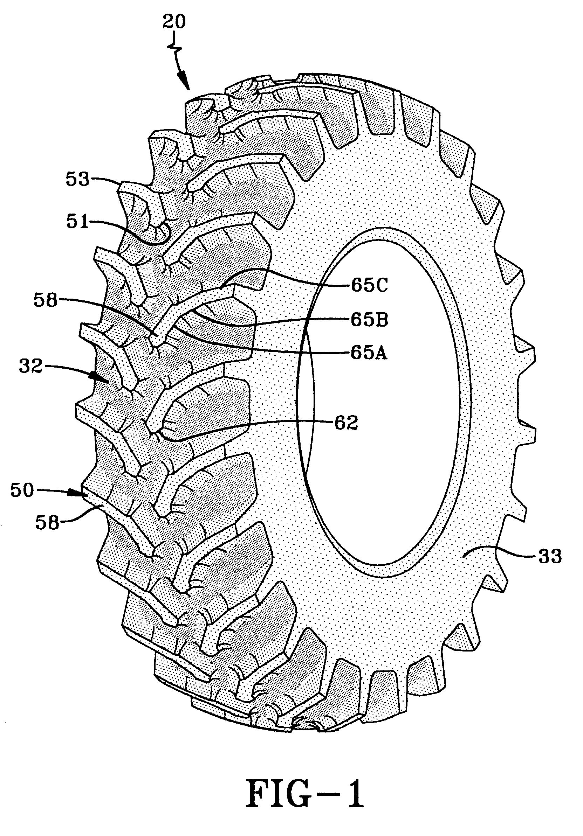

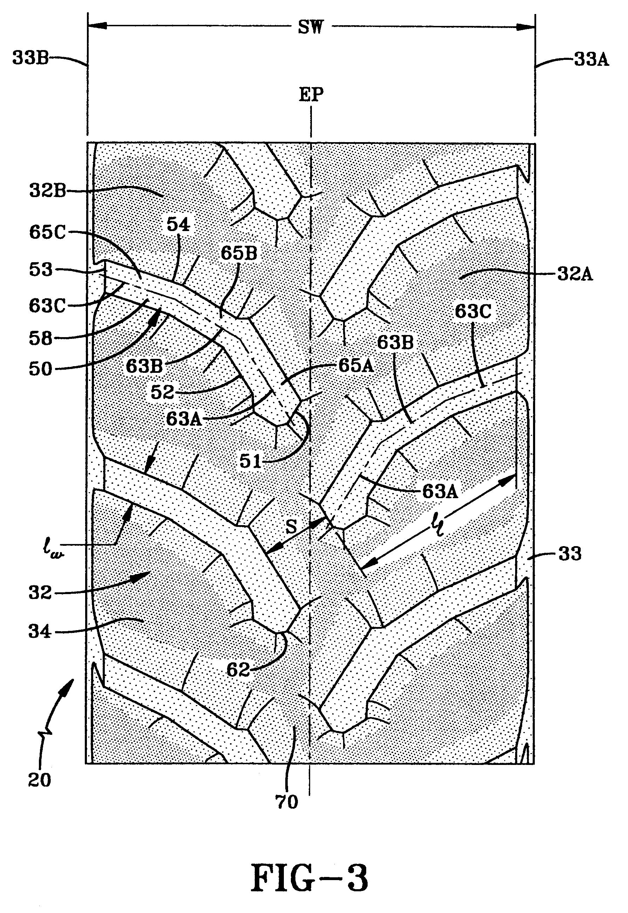

Now referring to Figs. 1-5, a tire 20 according to the present invention is illustrated. The tire 20 according to the present invention has a unique tread 32. The tread 32 has a first tread edge 33A and a second tread edge 33B. Disposed between the tread edges 33A,33B is an inner tread 34 and a plurality of lugs 50 extending radially outwardly from the inner tread 34.

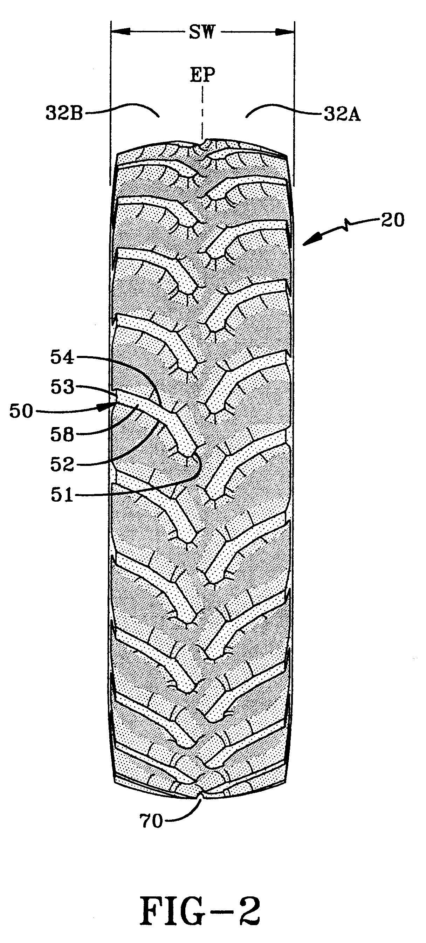

As illustrated in Fig. 2 each lug 50 has a radially outer surface 58, a first edge 52, second edge 54 and a centerline 63 between the first and second edges. Each lug 50 extends generally axially inwardly from an axially outer end 53 to an axially inner end 51.

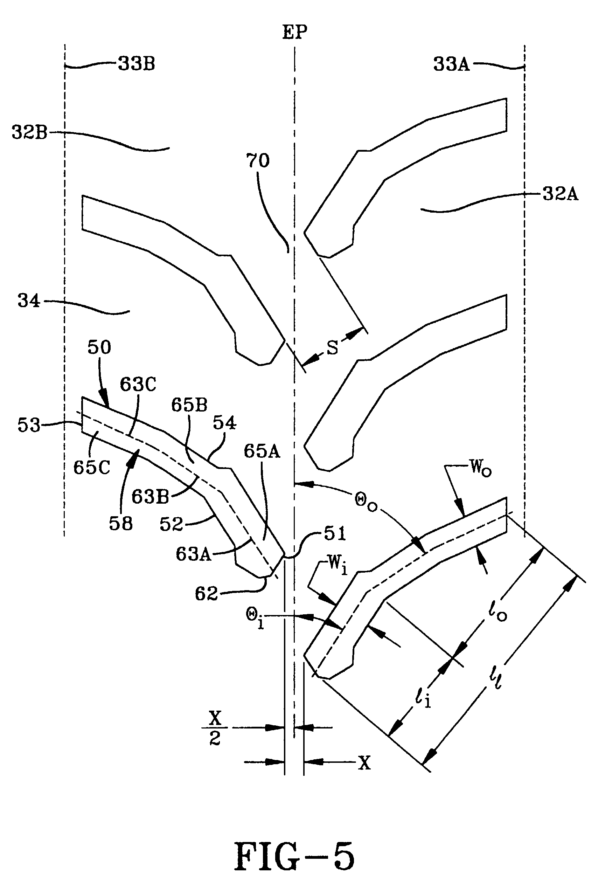

As illustrated in Fig. 5 the radially outer surface 58 when viewed from the contact patch has a polygonal shape. The surface 58 when divided into portions, each encompassed by a substantially rectangular portion 65A, 65B and 65C exhibits the approximate orientation of the lug 50. For purposes of this invention the centerlines 63A, 63B and 63C of the lug 50 is approximated by a line intersecting midway through, thus bisecting, the short legs of the rectangle, the line extending parallel to the long legs of the substantially rectangular portions 65A, 65B and 65C.

It is important to note that lugs have a length (lₗ) at least three times the average width of the element whereas block elements have an average width greater than one-third the length of the element. A lug for purposes of this invention has a length at least 10% of the section width of the tire.

The average distance along the centerlines 63 between the axially outer and inner ends 51,53 defines total the length (lₗ) of the lug 50.

The distance extending substantially perpendicularly between the first and second edges 52,54 of the lug define the lug width (l_{w}). The radial distance extending between the inner tread 34 and the edges 52,54 of the lug 50 defines the radial lug height (lₕ). The ratio of the lug width (l_{w}) to lug radial height (lₕ) is less than two-thirds over at least 70% of the lug length (lₗ).

The lugs 50 are arranged in two sets of circumferentially repeating rows of lugs, each set of lugs extend from its respective tread edge 33A,33B toward the equatorial plane. The lugs of one set are similarly but oppositely oriented relative to the lugs of an opposite set. Each set lies entirely with its respective tread half 32A or 32B. The axially inner ends 51 as shown are spaced from the equatorial plane (EP). This spacing creates a circumferentially continuous open channel 70 centered on the equatorial plane. This open center channel is quite unique relative to conventional long bar lugged tractor tires which axially overlap the opposite set of lugs creating an interlocking lug pattern which has been historically considered essential to ride and handling performance. This open channel 70 of the inventive tire has a minimum width equal to the closest spacing of adjacent lugs that distance being S and this feature greatly facilitates soil removal and helps prevent mud packing of the tread.

In order to maintain the handling performance of the tire, having no lugs at the center requires special attention to the lug design.

The preferred lug 50 as an enlarged axially inner portion 65A which has its centerline 63A inclined at an angle θᵢ of less than 40° relative to the equatorial plane EP. Preferably the centerline is inclined less than 35°, most preferably about 30°. The illustrated lugs 50 having θᵢ oriented at 31.3°. The axially inner portion 65A has a lug width Wᵢ that is substantially wider than the width Wₒ of the axially outer lug portions 65B,65C. In the preferred embodiment the width Wᵢ is at least 120% of the width Wₒ. Furthermore, the axially inner lug portion 65A has a slightly enlarged lug head 62 protruding from the leading edge 52. This enlargement is minimal due to the fact that the lug 50 must be able to easily penetrate the soil and not prevent the tread from penetrating deeply.

The inventor describes this axially inner portion 65A as a riding cleat. This riding cleat portion makes the tire tread stable and due to its large circumferential extent permits a smooth transition of load transfer as the tire rotates. This orientation makes both sets of lugs work in a much more balanced load carrying approach than the prior art tires.

The axially outer lug portions are shown as 65B and 65C. Each has a width Wₒ as shown. The portion 65C has a centerline 63B inclined at 55.6° while the centerline 63C of portion 65C has an inclination of 67.2°. For the purposes of this invention the inclination of total outer portion is determined by averaging the inclination in proportion to the length assuming the portions 65B and 65C are of equal length then the average inclination θ is (55.6° + 67.2°)/2 = 61.4°. The inventor believes this axially outer portion should be inclined relative to the equatorial plane in the range of 60° to 90°, preferably in the range of 60° to 75°.

Another very important aspect of the inventive tire is considered to be the amount of open space between the lugs 50. The lugs 50 are very widely spaced, the closest spacing being at the axially inner ends 51 of a lug 50 of a first set and the trailing edge of a circumferentially adjacent lug 50 of the opposite set. This distance S was determined to be at least 180° of the width Wₒ of the axially outer portion of the lug. The spacing S further enhances the very open centerline channel 70 of the tread, thus, making this tread uniquely designed for muddy soil.

As shown in Fig. 4 the channel 70 has an axial width χ, χ being the distance between planes tangent to the axially innermost location of the lug 50 on each respective tread half 32A,32B and parallel to the equatorial plane. the axial width χ is about 50% of the average width Wₒ of the outer portions 65B,65C of the lug 50. for example, the width Wₒ of the lugs 50 as illustrated was 1.40 inches (35.6 mm) and the axial width χ was .70 inches (8.9 mm) for the channel 70.

The above tire 20 has the lugs of a compound linear configuration having three portions 65A, 65B and 65C. Alternatively, the lug 50 can be of a curved in shape having two portions, as long as the angular relationship of the axially inner portion 65A and its respective size and location is maintained. Then, it is believed that the narrower axially outer portion can be of a variety of widths, curves or orientations without departing from the spirit of the invention.

It is another important aspect of the invention that the lugs 50 have the axially inner portion having a length of at least 25% of the total lug length, preferably at least 30%, most preferably about one-third of the total lug length.

## Claims

1. A pneumatic agriculture tire for the drive axle of a tractor or like vehicle having a maximum section width (W), an axis of rotation, an equatorial plane, centered between the maximum section width and being perpendicular to the axis, a casing have a carcass reinforced with rubber coated cords, a rubber tread disposed radially outwardly of the carcass, the tread being divided on each side of the equatorial plane into a first and a second tread half, the tread characterized by an inner tread and a plurality of substantially similar tread lugs, half of the lugs being on the first half of the tread the other half of the lugs being on the second half of the tread, each lug being oriented similarly within its tread half each lug being equally but oppositely oriented relative to lugs of the opposing tread half, each lug having a radially outer surface divided into an axially inner portion and an axially outer portion, the axially inner portion having a centerline midway between a leading and a trailing edge of the lug, the centerline forming an acute included angle θᵢ with respect to the equatorial plane of less than 40°, the axially outer portion having a centerline midway between a leading and trailing edge of the lug, the centerline forming an average acute angle θₒ with respect to the equatorial plane greater than 60° and less than 90°, each lug surface lies entirely within its respective tread half and has an axially innermost end spaced from the equatorial plane forming a circumferentially straight continuous open channel centered at the equatorial plane.

2. The pneumatic agricultural tire for the drive axle of a tractor or like vehicle of claim 1 further characterized by the length of the centerline of the axially inner portion is less than the length of the centerline of the axially outer portion while the average width of the surface of the axially inner portion is greater than the average width of the surface of the axially outer portion.

3. The pneumatic agricultural tire for the drive axle of a tractor or like vehicle of claim 1 further characterized by the minimum distance between adjacent, lug surfaces occurs along a line intersecting the equatorial plane the line extending a distance of at least 180% of the surface width of the axially outer portion.

4. The pneumatic agricultural tire for the drive axle of a tractor or like vehicle of claim 1 further characterized by the centerline of the axially inner portion forms an acute angle θᵢ of about 30°.

5. A pneumatic agricultural tire for the drive axle of a tractor or like vehicle, the tire having a radially outer tread located between a pair of tread edges, the tread having a plurality of traction lugs, having a total length (L) extending from a tread edge toward the equatorial plane of the tire characterized by:
an enlarged width axially inner portion, the axially inner portion being elongated and having a length in the range of 25% to 40% of the total lug length, the enlarged width axially inner portion being inclined at an angle of less than 40° relative to the equatorial plane as measured from a centerline of the axially inner portion;
an axially outer portion having a length at least 60% of the total lug length and a width less than 80% of width of the axially inner portion, the axially outer portion being inclined at an angle of 60° to 90° relative to the equatorial plane as measured from a centerline of the axially outer portion.

6. The pneumatic agricultural tire for the drive axle of a tractor or like vehicle of claim 5 further characterized by the enlarged width axially inner portion of the lug is axially spaced from the equatorial plane of the tire.

7. The pneumatic agricultural tire for the drive axle of a tractor or like vehicle of claim 6 further characterized by the circumferentially straight continuous open channel has an axial width χ, χ being defined as the distance between planes tangent to the axially innermost location of the lug on each respective tread half and parallel to the equatorial plane, the axial width χ being about 50% of the average width Wₒ of the axially outer portions of the lug.
